# EUROPEAN PATENT APPLICATION

(11) **EP 1 956 869 A2**
(43) Date of publication of application: **13.08.2008**
(21) Application number: 07118350.3
(22) Date of filing: 12.10.2007
(51) Int. Cl.: H05B 33/08

(54) **Light source driving apparatus, display device having the same, and driving method thereof**

(30) Priority: 06.02.2007 KR 20070012116
(71) Applicant: SAMSUNG ELECTRONICS CO., LTD., Suwon-si, Gyeonggi-do (KR)
(72) Inventor: Jeong, Jin-gil, 1644 Seocho-dong,Seocho-gu,Seoul (KR); Lee, Seung-yo, Yeongtong-gu,Suwon-si Gyeonggi-do (KR); Lee, Jung-seob, Yeongtong-gu Suwon-si Gyeonggi-do (KR)
(74) Representative: Robinson, Ian Michael

(57) **Abstract**

A light source driving apparatus (100) for time-dividing and driving a plurality of light sources, a display device having the same, and a driving method thereof are provided. The light source driving apparatus (100) includes a light source module (120) including a plurality of light sources; a light source driver (160) which outputs a driving current to drive the light sources; and a switch (140) which selectively feeds the driving current to the light sources respectively and sequentially drives the plurality of the light sources. The light source driver (160) outputs a low-level driving current to drive the light sources, and thus the driving speed, the system efficiency and the optical power can be increased and the manufacturing cost can be reduced.

## Description

### BACKGROUND OF THE INVENTION

### 1. Field of the Invention

The present invention relates generally to a light source driver, a display having the same, and to a method of driving the display.

### 2. Description of the Related Art

Recently, one of the major concerns in regards to a display device is implementing a display part of the display device as a large screen. In addition, display devices that have a large screen with high definition as a display part are in high demand. To fulfill this demand, projection devices comprising projection televisions (TVs) or projectors have been suggested as larege-screen high definition display devices.

A projection device comprises an optical engine. According to the characteristics of the optical engine, the projection device is classified as a cathode ray tube (CRT) device, a liquid crystal display (LCD) device, or a digital lighting processing (DLP) device.

The LCD devices are most frequently used among the projection devices. However, an LCD device's panel manufacture process is complicated and its luminance is quite low. Thus, the DLP is attracting much attention, which adopts the digital micromirror device (DMD) technology developed at Texas Instruments.

The DMD produces an image of the intended shape and color by independently controlling several millions of microscopic mirrors of 17x17 micrometers using electrostatic attraction and rotating the mirrors by +10° to -10° into two modes. One of the advantages of the DMD is that it can enlarge the image output from a television, VCR, or PC onto a 100-inch large screen without degrading the quality of the output image.

To display an image using the DMD, a light source radiating the light onto the DMD is required. The light source for the DMD typically uses a lamp or a light emitting diode (LED). Laser diodes to produce red (R), green (G), and blue (B) lights are also being used. To increase the optical power for the image quality and the image definition, that is, to improve the luminance of the image, a plurality of laser diodes, rather than a single laser diode, is employed by the light source to emit the light on the mirrors of the DMD.

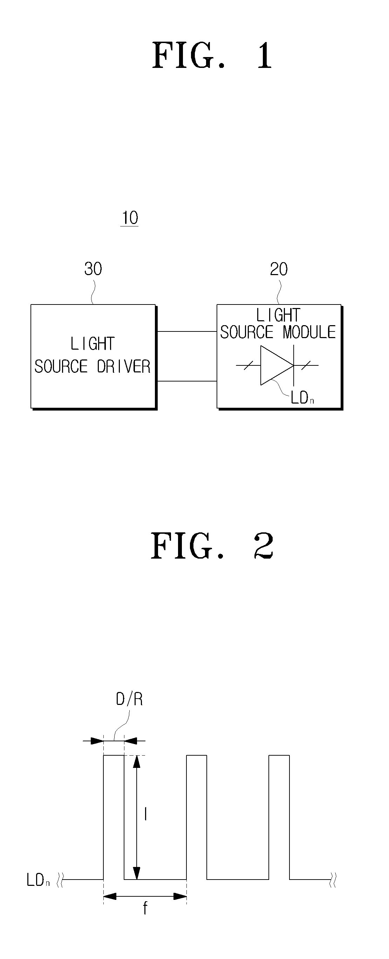

FIG. 1 is a simplified diagram of a conventional light source driving apparatus, and FIG. 2 shows a current pulse waveform applied to the light source module of the light source driving apparatus of FIG. 1.

The conventional light source driving apparatus 10 of FIG. 1 comprises a light source driver 30 which outputs a driving signal to a light source module 20.

The light source driver 30 controls the light source module 20 to produce light of a certain luminance according to the signal processing result of an image signal applied to the light source driver 30 from an external display device (not shown).

The light source module 20 comprises a plurality of laser diodes (LDn) coupled in parallel. The laser diode can be a diode pumped solid state (DPSS) laser for the sake of compactness, high efficiency, and high power.

When the DPSS laser drives with a specific frequency f and a specific duty ratio D/R, it produces the maximum efficiency. To achieve this maximum efficiency, the light source driver 30 drives the light source module 20, for example, with the driving frequency of 200kHz and the D/R of 20%, as shown in FIG. 2.

When the light source module 20 operates as above, all the laser diodes LDn coupled in parallel in the light source module 20 are driven together. If the current required for driving a single laser diode is 4 amperes (A) and the light source module 20 comprises five DPSS lasers, the light source driver 30 is required to output a driving current I of 20A to drive all the five DPSS lasers of the light source module 20.

In this case, while the optical power can be increased by driving all the laser diodes of the light source module 20 together, it becomes difficult to accurately input the pulse waveform of a driving current I with a specific duty ratio to the light source module 20 due to the high level of the driving current I required. As a result, even when a plurality of the laser diodes LDn areimplemented in the light source module 20, the designer cannot acquire his/her intended optical power. As a result, the system efficiency may be degraded.

Since the light source driver 30 has to produce the high-level driving current, a heat radiation mechanism such as a heat sink is also required, which causes an increase in manufacturing costs.

Further, since the high-level driving current is fed to the light source module 20 in order to drive it, a time delay occurs in the course of the pulse waveform formation. Accordingly, the driving speed of the light source module 20 is decreased, which in turn decreases the driving speed of the entire system.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided a light source driving apparatus, a method for driving a plurality of light sources, a display device, and a method for driving a display device as set forth in the appended claims. Other features of the invention will be apparent from the dependent claims, and the description which follows.

The present invention provides a light source driving apparatus for driving light sources by dividing a plurality of the light sources into blocks and using a low-level driving current.

The present invention also provides a display device having the light source driving apparatus.

The present invention also provides a driving method of the light source driving apparatus and the display device.

The embodiments of the present invention provide a light source driving apparatus that enhances a driving speed and a driving efficiency and reducing a manufacture cost by dividing a plurality of light sources into blocks, and driving the divided plurality of light sources, and a display apparatus having the light source driving apparatus, and a driving method thereof.

According to an aspect of the present invention, a light source driving apparatus comprises a light source module comprising a plurality of light sources; a light source driver which outputs a driving current to drive the plurality of the light sources; and a switch which selectively feeds the driving current to the plurality of the light sources respectively and sequentially drives the selectively fed light sources.

The light source driver may provide the switch with a control signal to drive the selectively fed light sources with a certain duty ratio in sequence.

When the number of the plurality of the light sources is greater than an inverse number of the duty ratio, the light source driver may provide the control signal with respect to the selectively fed light sources by blocks, wherein the blocks respectively correspond to the selectively fed light sources, wherein a number of blocks corresponds to an integer part of the inverse number of the certain duty ratio.

When the number of the plurality of the light sources is less than an inverse number of the duty ratio, the light source driver may divide the light sources into blocks and provide the control signal to each block.

The switch may comprise a plurality of switch elements which interconnect the plurality of the light sources to the light source driver.

The light source driver may output the control signal through signal lines linked to the respective plurality of the switch elements.

The light source driving apparatus may further comprise an element selector which selects a switch element among the plurality of the switch elements to drive the selectively fed light sources in response to the control signal.

The element selector may be a demultiplexer.

The light source driver may comprise a power supplier which outputs the driving current; and a light source controller which outputs the control signal to the switch.

The light source may be a diode pumped solid state (DPSS) laser.

The light source driving apparatus may further comprise a pulse width modulator (PWM) which variably generates the certain duty ratio.

According to another aspect of the present invention, a method for driving a plurality of light sources comprises setting a setup condition to divide the plurality of the light sources based on time and drive the plurality of the light sources; generating a control signal based on the setup condition; and sequentially providing a driving current to the plurality of the light sources according to the control signal.

The control signal may be a signal to drive the plurality of the light sources with a certain duty ratio.

The setting the condition may comprise providing the control signal with respect to the plurality of the light sources by blocks, wherein each block is defined by the setup condition in the setting the condition, wherein a number of the blocks corresponds to an integer part of an inverse number of the certain duty ratio when the number of the plurality of the light sources is greater than the inverse number of the certain duty ratio.

The setting may comprise dividing the plurality of the light sources into blocks and providing the control signal to each block when the number of the plurality of the light sources is less than an inverse number of the certain duty ratio.

The generating the control signal may comprise generating a plurality of control signals corresponding to the blocks.

The generating the control signal may comprise selecting a unit of the block and generating a control signal comprising a logical combination to supply the driving current to the unit of the block.

According to further aspect of the present invention, a display device comprises a display which displays an image; an optical engine which emits lights of a certain luminance to display the image on the display; and a controller which controls the optical engine to process an image signal input from outside and display the image, wherein the optical engine comprises a light source module comprising a plurality of light sources, a light source driver which outputs a driving current to drive the plurality of the light sources, and a switch which selectively feeds the driving current to the plurality of the light sources and sequentially drives the selectively fed light sources.

The light source driver may sequentially provide the switch with a control signal for driving the selectively fed light sources with a certain duty ratio.

The optical engine may comprise a digital micromirror device (DMD).

The light source may be a diode pumped solid state (DPSS) laser.

According to still aspect of the present invention, a method for driving a display device which comprises a display which displays an image and a plurality of light sources which emit lights of a certain luminance, comprises setting a setup condition to time-divide and drive the plurality of the light sources; generating a control signal based on the setup condition; sequentially providing a driving current to the plurality of the light sources according to the control signal; and displaying an image on the display using lights emitted from the plurality of the light sources which are sequentially driven by the driving current.

The control signal may be a signal to drive the plurality of the light sources with a certain duty ratio.

The setting the condition may comprise providing the control signal with respect to the plurality of the light sources by blocks, wherein each block is defined by the condition in the setting the condition, wherein a number of the blocks corresponds to an integer part of an inverse number of the certain duty ratio when the number of the plurality of the light sources is greater than the inverse number of the certain duty ratio.

The setting the condition may comprise dividing the plurality of the light sources into blocks and providing the control signal to each block when a number of the plurality of the light sources is less than an inverse number of the certain duty ratio.

Therefore, the optical power can be increased by supplying the plurality of the light sources with the same electric current of the same driving frequency and the same duty ratio. The supply of a low-level driving current can raise the efficiency. Since it is possible to utilize the light source driving apparatus to supply a low-level driving current, the manufacturing costs required to implement a heat radiation mechanism can be reduced. Furthermore, the overall driving speed of the system can be enhanced by increasing the driving speed of the plurality of the light sources by virtue of the low-level driving current.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a simplified diagram of a conventional light source driving apparatus;
FIG. 2 depicts a current pulse waveform applied to the light source module of the light source driving apparatus of FIG. 1;
FIG. 3 is a simplified diagram of a light source driving apparatus according to an exemplary embodiment of the present invention;
FIG. 4 is a detailed diagram of the light source driving apparatus according to an exemplary embodiment of the present invention;
FIG. 5 depicts a current pulse waveform applied to the light source module of the light source driving apparatus of FIG. 4;
FIG. 6 is a diagram of a light source driving apparatus according to another exemplary embodiment of the present invention;
FIG. 7 is a diagram of a light source driving apparatus according to still another exemplary embodiment of the present invention;
FIG. 8 illustrates a driving method of the light source driving apparatus according to an exemplary embodiment of the present invention;
FIG. 9 is a simplified diagram of a display device according to an exemplary embodiment of the present invention; and
FIG. 10 illustrates a driving method of the display device according to an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

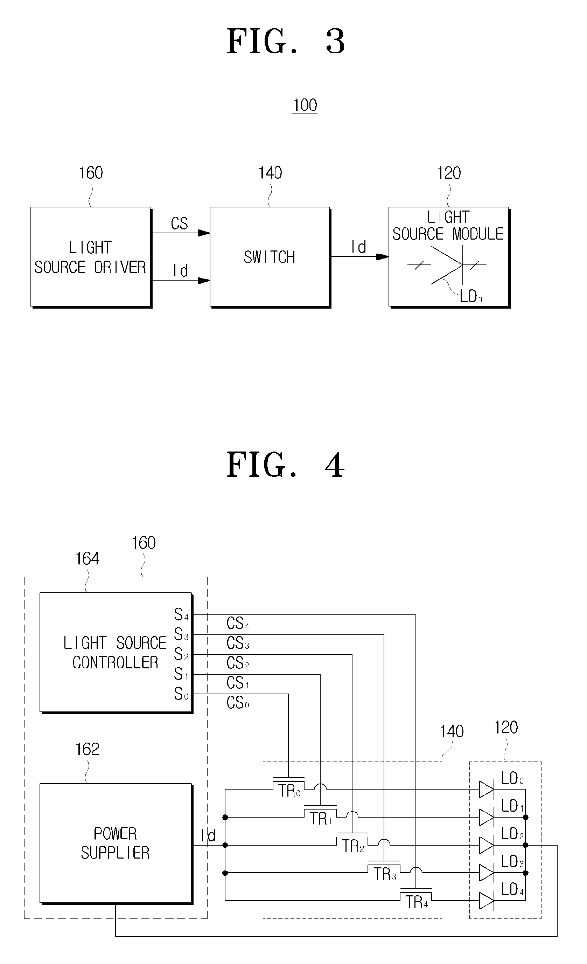

FIG. 3 is a simplified diagram of a light source driving apparatus according to an exemplary embodiment of the present invention.

The light source driving apparatus 100 of FIG. 3 comprises a switch 140 coupled to a light source module 120, and a light source driver 160 for providing a control signal CS and a driving current Id to the switch 140.

If the light source module 120 comprises a plurality of light sources, for example, a plurality of laser diodes LDn, the switch 140 can comprise a plurality of switch elements for controlling the respective laser diodes LDn.

The switch element can be implemented using a semiconductor element such as metal-oxide-semiconductor field-effect-transistor (MOSFET), but it is not limited to only MOSFETs. Any elements capable of providing the driving current Id to the light source module 120 by switching according to the control signal CS fed from the light source driver 160 may be implemented as the switch elements.

To divide and drive the plurality of the light sources into blocks, switch elements corresponding to a number of blocks can be provided.

For instance, if five laser diodes LDn are included in the light source module 120, and the laser diodes are partitioned into five blocks, that is, when one laser diode constitutes one block, five switch elements can be provided. If ten laser diodes LDn are included in the light source module 120, and the laser diodes are partitioned to five blocks, that is, when two laser diodes constitute one block, five switch elements can be provided. Note that the laser diode being switched at the same time would be coupled to the corresponding switch element.

The light source driver 160 outputs the control signal CS to partition the light sources of the light source module 120 into blocks and drive the blocks by selectively activating the switch 140. Also, the light source driver 160 generates the driving current Id applied to the light sources and outputs the driving current Id to the switch 140.

When the switch element is implemented using the MOSFET, the driving current Id is fed to the drain terminal of the MOSFET and the control signal CS is fed to the gate terminal of the MOSFET.

Accordingly, the light source driving apparatus 100 drives the light sources by blocks by outputting the control signal CS to drive the light sources by blocks with the driving current Id applied to the switch 140. The light source driving apparatus 100 selectively controls the switching operation of the switch elements.

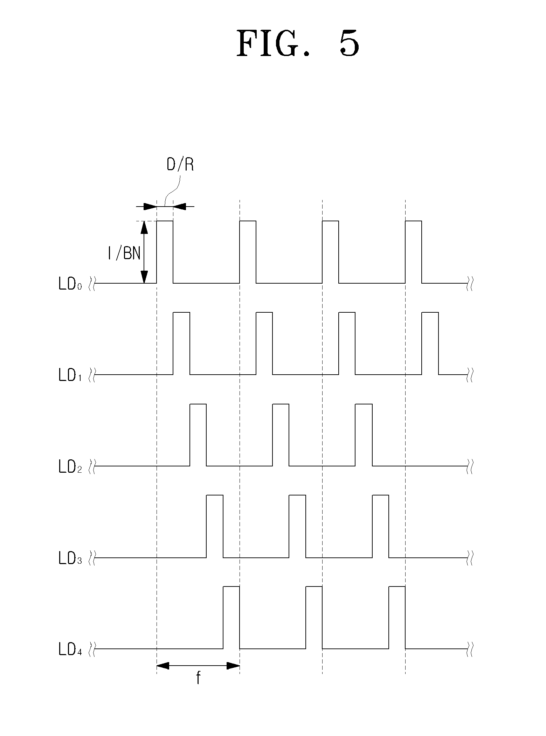

The light source driving apparatus 100 is explained in more detail below with reference to FIGS. 4 and 5.

FIG. 4 is a detailed diagram of the light source driving apparatus 100 according to an exemplary embodiment of the present invention, and FIG. 5 depicts a current pulse waveform applied to the light source module 120 of the light source driving apparatus 100 of FIG. 4.

The light source driving apparatus 100 of FIG. 4 comprises the switch 140 coupled to the light source module 120, and the light source driver 160 for providing the control signal CSn and the driving current Id to the switch 140.

The switch 140 comprises a plurality of switch elements. Each switch element is coupled to the light source driver 160 through an independent signal line. For instance, when there are five switch elements as shown in FIG. 4, they independently receives five control signals CS₀ through CS₄ from the light source driver 160 via five different signal lines.

If the light source module 120 comprises five light sources, the switch elements can be connected to the respective light sources. If the light source module 120 comprises ten light sources, two light sources and one switch element can be coupled in parallel.

The light source driver 160 comprises a power supplier 162 and a light source controller 164.

The power supplier 162 generates and outputs the driving current Id of a suitable level for driving the laser diodes LD₀ through LD₄ of the light source module 120 by converting the power source fed from outside to a certain level. For instance, when the current level 4A is suitable for the driving of the first laser diode L₀, the power supplier 162 can produce and output the driving current 4A. When the current level 8A is suitable for the driving of the first laser diode L0, the power supplier 162 can produce and output the driving current 8A.

The light source controller 164 generates and outputs the control signals CSn for selectively activating the switch elements corresponding ot the laser diodes to be driven.

For instance, when one laser diode constitutes a certain block unit, for example, one block as shown in FIG. 4, the light source controller 164 can sequentially generate and output the control signals CS₀ through CS₄ for driving the five blocks through the respective signal lines.

The light source controller 164 can constitute the block unit for driving the light sources all together according to the driving frequency f and the duty ratio D/R, wherein the driving frequency f and the duty ration D/R can realize the optimal driving efficiency and the optimal optical power of the laser diode.

For instance, as shown in FIG. 4, the laser diodes LD₀ through LD₄ employ DPSS lasers. The optimal driving efficiency and the optimal optical power of the laser diodes LD₀ through LD₄ are realized when the optimal driving conditions of the DPSS laser are a driving frequency of 200kHz and a duty ratio D/R of 20%. In this case, the laser diodes LD₀ through LD₄ can be divided and driven by the block unit corresponding to an integer part of the inverse number of the duty ratio D/R, that is, corresponding to 1/(0.2)=5. In doing so, when the number of the laser diodes is five as shown in FIG. 4, one block unit can cover one laser diode. When ten laser diodes are used, one block unit can cover two laser diodes.

It is advantageous if the power supplier 162 outputs the electric current of the corresponding level by taking into account the number of the laser diodes in the block unit and the driving current of the laser diodes. In the case discussed above, if one block unit comprises one laser diode and the driving current of the laser diodes is 4A, the power supplier 162 can output the current 4A. If one block unit comprises two laser diodes and the driving current of the laser diodes is 4A, and the laser diodes in the block unit are connected to one switch element in parallel, the power supplier 162 can output the current 8A.

When the DPSS laser exhibits the optimal driving efficiency and the optimal optical power at the duty ratio of 25% with the same driving frequency, the light source controller 164 can output five control signals for dividing the light sources into four blocks and driving the four blocks. When the light source module 120 comprises five laser diodes as shown in FIG. 4, the light source controller 164 may output the control signals to activate at least one switch element with another switch element at the same time.

It should be understood that the cases discussed above are used merely as an example, and that the light sources can be divided into block units and driven corresponding to an integer part when the inverse number of the duty ratio comprises the integer part and a fractional part.

Alternatively, when the laser diodes are driven under the same condition of the driving frequency 200kHz and the duty ratio D/R of 20%, and the light source module 120 comprises the laser diodes smaller than the inverse number 5 of the duty ratio D/R in number, the light sources can be sequentially activated according to the corresponding duty ratio within the driving frequency range, rather than being divided into five blocks.

In the construction of the light source driving apparatus 100 shown in FIG. 4, when the light source module 120 is driven, the light sources LD₀ through LD₄ are time-divided and driven in sequence at the driving frequency f as shown in FIG. 5.

When the light sources are coupled in parallel and the power supplier 162 supplies the current at the same time as shown in FIGS. 1 and 2, a driving current I of 20A would be required by the light source module 20 for the driving current 4A of each of the light source. By contrast, when the light source driving apparatus 100 divides the laser diodes of the light source module 120 into blocks based on the duty ratio and drives them in the time-division manner as shown in FIGS. 4 and 5, the laser diodes LD₀ through LD₄ are driven in sequence. Hence, the supply of the driving current of the actually required driving current 4A (I/BN where BN denotes the number of blocks) will be sufficient in the exemplary embodiment illustrated in FIG. 4.

That is, the light source driving apparatus 100 of the present invention can supply the laser diodes LD₀ through LD₄ with the driving current of substantially the same level as the light source driving apparatus 10 of FIG. 1, and the optical powers from the light sources may be equal.

Also, the driving frequency of the light sources may be the same, and the duty ratio D/R for supplying the same driving current may be the same as well.

Thus, compared to the light source driving apparatus 10 of FIG. 1, the light source driving apparatus 100 can construct the power supplier 162 for outputting a low-level current and raise the driving speed of the light source module 120.

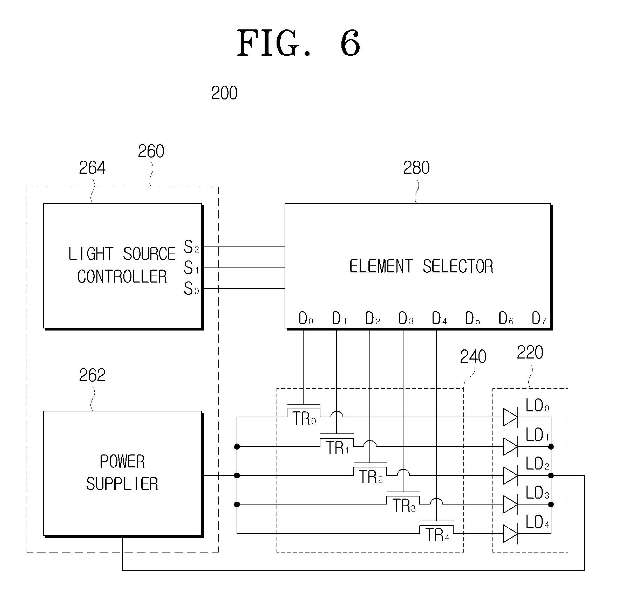

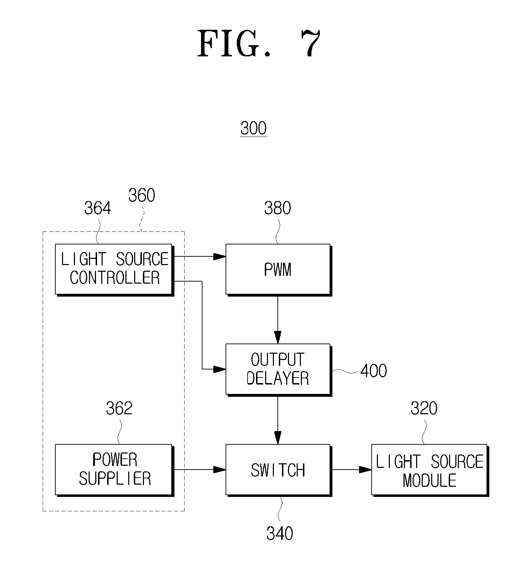

FIG. 6 depicts a light source driving apparatus according to another exemplary embodiment of the present invention, and FIG. 7 depicts a light source driving apparatus according to still another exemplary embodiment of the present invention.

The light source driving apparatus 200 of FIG. 6 comprises a switch 240 coupled to a light source module 220, a light source driver 260 for providing a control signal and a driving current, and an element selector 280 for selecting a switch element of the switch 240 based on the control signal fed from the light source driver 260.

The light source module 220, the switch 240, and a power supplier 262 of the light source driver 260 have the substantially same construction as the light source module 120, the switch 140, and the power supplier 162 of FIG. 4, and thus further explanations of these components shall be omitted.

Unlike the light source controller 164 of FIG. 4, the light source controller 264 generates and outputs a control signal comprising a logical combination to control the element selector 280. For instance, the light source controller 264 can output the control signal comprising a 3-bit logical combination.

The element selector 280 outputs the switching signal through one of outputs D₀ through D₇ based on the control signal fed from the light source controller 264. For doing so, the element selector 280 can be implemented using a demultiplexer.

The driving of the light source driving apparatus 200 is now explained in detail.

The light source controller 260 outputs the control signal comprising a 3-bit logical combination, for example, the control signal "0 0 1" to the element selector 280. The element selector 280 outputs the switching signal of logic "H" to the corresponding output, for example, to the second output D₁ based on the input control signal. Accordingly, when the second switch element TR₁ is activated, the driving current from the power supplier 262 is input to the second laser diode LD₁ to drive the second laser diode LD₁. The light source controller 264 sequentially outputs the control signals so as to drive the laser diodes LD₀ through LD₄ in sequence as shown in FIG. 5.

Of the outputs D₀ through D₇ of the element selector, the outputs D₅, D₆, and D₇ that are not connected to the switch 240 can be selectively used if the number of the laser diodes LD₀ through LD₄ in the light source module 220 increases. Note that the light source controller 260 can selectively output the control signal such that the switching signal is not output through the extra outputs D₅, D₆, and D₇.

When the light source driver 260 is coupled as a single chip set, the light source driving apparatus 200 according to another aspect of the present invention can decrease the number of pins coupled to drive the switch 240, compared to the light source driving apparatus 100 according to an exemplary embodiment of the present invention. Also, the light source driving apparatus 200 attains extendibility because in the case that laser diodes are later added in the light source module 220, the outputs D₅-D₇ of the element selector 280 are available. This can improve the optical power and the image definition of the light source driving apparatus 200.

According to still another exemplary embodiment of the present invention, the light source driving apparatus 300 of FIG. 7 comprises a switch 340 coupled to a light source module 320, a light source driver 360 for providing a control signal and a driving current, a pulse width modulator (PWM) 380 for modulating the pulse width of the control signal output from the light source driver 360, and an output delayer 400 for delaying the output of the modulated control signal.

The light source module 320, the switch 340, and the power supplier 362 of the light source driver 360 have the substantially same construction as the light source module 120, the switch 140, and the power supplier 162 of FIG. 4, and thus further descriptions of these components shall be omitted.

The light source controller 364 outputs the control signal with a certain electric potential to the PWM 380.

The PWM 380 generates the pulse-width-modulated control signal using the input control signal and a pulse signal, such as square wave or saw-tooth wave, input from an oscillator (not shown). Since various constructions of the PWM 380 are well known in the art, its detailed structure and operation shall be omitted.

The output delayer 400 delays the control signal modulated at the PWM 380 by a certain time and outputs the delayed control signal to the switch 340. For instance, when a control signal is generated with a certain pulse width using a saw-tooth pulse signal and the control signal output from the light source controller 364, the output delayer 400 delays the generated control signal by the time corresponding to the duty ratio D/R of FIG. 5 and outputs the delayed signal.

To delay the generated control signal as such, the output delayer 400 can be constructed such that delay elements such as buffers are connected in series, and the link node of each delay element can be coupled to each switch element of the switch 340. For example, the link node of each delay element can be opted to the gate terminal of the MOSFET to input the control signal.

In the light source driving apparatus 300 according to still another exemplary embodiment of the present invention, since the light source driver 360 outputs control signals of various electric potentials, the laser diodes of the light source module 320 can be time-divided and driven. Therefore, the operational load on the light source controller 360 can be mitigated.

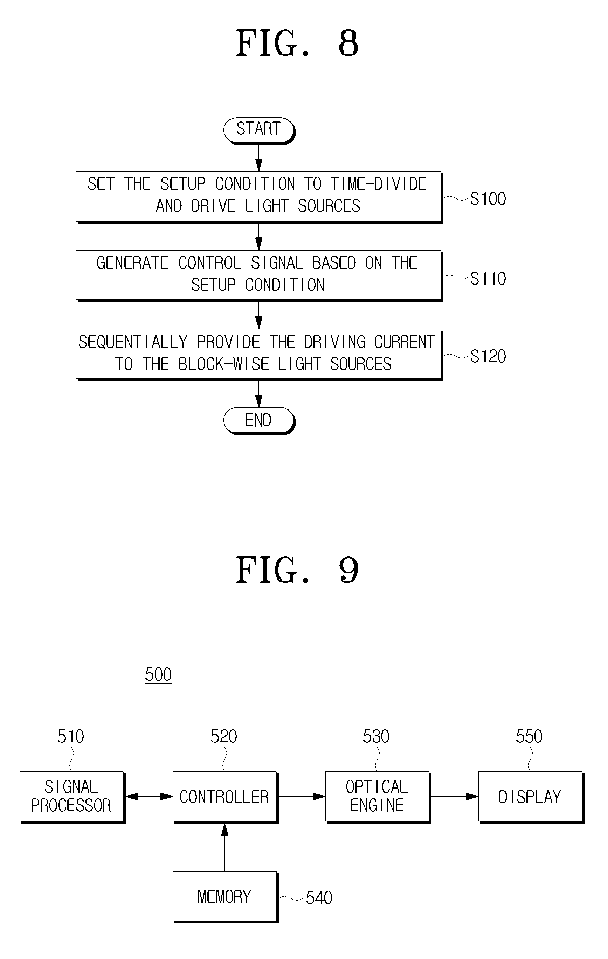

FIG. 8 illustrates a driving method of the light source driving apparatus according to an exemplary embodiment of the present invention.

Referring now to FIGS. 4 and 8, the driving method of the light source driving apparatus 100 according to an exemplary embodiment of the present invention comprises setting a setup condition to time-divide light sources and drive the time-divided light sources (S100), generating a control signal based on the setup condition (S110), and sequentially providing a driving current to the time-divided light sources according to the control signal (S 120).

In operation S100, while at least one laser diode is coupled by blocks to the switch elements in the light source driving apparatus 100, the light source controller 140 sets the setup condition to apply the driving current in the duty ratio corresponding to the specification by determining the driving frequency corresponding to the specification of the laser diode and the output timing of the control signal.

The setup condition is the output timing of the control signal and the driving frequency to sequentially drive the light source module 120 by blocks.

In operation S110, the light source controller 164 generates control signals in sequence according to the output timing of the control signal and the driving frequency and outputs the control signals to the switching elements TR₀ through TR₄.

In operation S120, the driving current Id, which is output from the power supplier 162 through the switch elements TR₀ through TR₄ selectively activated in operation S110, is sequentially fed to the laser diodes LD₀ through LD₄ through the activated switch elements with the current waveform as shown in FIG. 5, thus sequentially activating the laser diodes LD₀ through LD₄.

FIG. 9 is a simplified diagram of a display device according to an exemplary embodiment of the present invention.

The display device 500 of FIG. 9 comprises a signal processor 510, a controller 520, an optical engine 530, a memory 540, and a display 550.

The signal processor 510 receives an incoming video signal from an external host device such as computer or broadcasting system, processes and outputs the received image signal.

The image signal can be of various formats, such as an analog broadcast signal received via an antenna, a composite video broadcast signal (CVBS) format video signal, a separate video (S-video) signal, an analog video signal input from a computer through a D-sub connector, and a digital visual interface (DVI) digital video signal.

The controller 520 controls the overall operation of the display device 500. For instance, the controller 520 outputs a control signal to control the video processing at the signal processor 510, or controls the optical engine 530 to convert the image signal processed at the signal processor 510 to lights corresponding to the processed image signal.

The optical engine 530 comprises a digital micromirror device (DMD), the light source modules 120, 220, and 320 comprising the laser diodes as shown in FIGS. 4 through 7, and the light source driving apparatuses 100, 200, and 300 for controlling the light source modules 120, 220 and 320 to emit lights. Under the control of the controller 520, the optical engine 530 converts the image signal to image lights, projects the image lights onto the display 550, and then displays the image corresponding to the image signal using the lights emitted from the laser diodes under the control of the light source driving apparatuses 100, 200, and 300.

The memory 540 stores application programs required to drive the display device 500 or data generated in the operation of the display device 500.

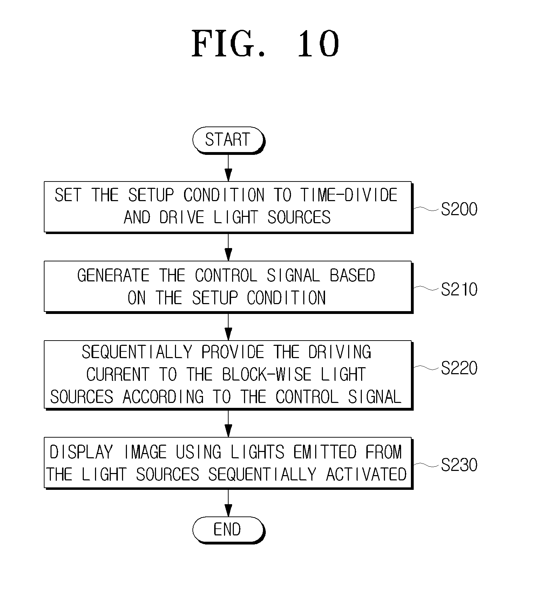

FIG. 10 illustrates a driving method of the display device according to an exemplary embodiment of the present invention.

Referring to FIGS. 4, 9, and 10, the driving method of the display device 500 comprises setting a setup condition to time-divide the light sources and drive the time-divided light sources(S200), generating a control signal based on the setup condition (S210), sequentially providing the driving current to the time-divided light sources according to the control signal (S220), and displaying image using lights emitted from the light sources sequentially activated (S230).

In operation S200, while at least one laser diode is coupled by blocks to the switch elements in the light source driving apparatus 100, the light source controller 140 sets the setup condition to apply the driving current in the duty ratio corresponding to the specification by determining the driving current and the output timing of the control signal in accordance with the specification of the laser diodes.

The setup condition is the output timing of the control signal and the driving frequency to sequentially drive the light source module 120 by the unit of a block, wherein the block is defined by the setup condition.

In operation S210, the light source controller 164 sequentially generates the controls signals according to the output timing of the control signal and the driving frequency and then outputs the control signals to the switch elements TR₀ through TR₄.

In operation S220, the driving current Id, which is output from the power supplier 162 through the switch elements TR₀ through TR₄ selectively activated in operation S210, is fed to the laser diodes LD₀ through LD₄ in sequence through the activated switch elements with the current waveform as shown in FIG. 5, thus sequentially activating the laser diodes LD₀ through LD₄.

In operation S230, using the light produced from the laser diodes sequentially activated in operation S220, the optical engine 530 emits the lights of Red (R), Green (G), and Blue (B) into the millions of mirrors, which are not illustrated, and projects and displays images of the intended shape and colors to the display 550 by changing the light reflection angles of the mirrors under the control of the controller 520.

As set forth above, the optical power can be increased by supplying the light sources with the same electric current of the same driving frequency and the same duty ratio.

The supply of a low-level driving current can raise the efficiency.

Since it is possible to utilize the light source driving apparatus capable of supplying a low-level driving current, the manufacturing cost required for implementing a heat radiation mechanism in a light source driving apparatus can be reduced.

Further, the overall driving speed of the system can be enhanced by increasing the driving speed of the light sources by virtue of the low-level driving current.

The foregoing embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A light source driving apparatus (100), comprising:
a light source module (120) comprising a plurality of light sources;
a light source driver (160) which outputs a driving current to drive the light sources; and
a switch (140) which selectively and plurally feeds the driving current to the plurality of the light sources and sequentially drives the selectively fed light sources.

2. The light source driving apparatus (100) of claim 1, wherein the light source driver (160) sequentially provides the switch (140) with a control signal to drive the selectively fed light sources with a predetermined duty ratio.

3. The light source driving apparatus (100) of claim 2, wherein, when a number of the plurality of the light sources is greater than an inverse number of the predetermined duty ratio, the light source driver (160) provides the control signal with respect to the selectively fed light sources by blocks, wherein the blocks respectively correspond to the selectively fed light sources, wherein a number of blocks corresponds to an integer part of the inverse number of the predetermined duty ratio.

4. The light source driving apparatus (100) of claim 2, wherein, when a number of the plurality of the light sources is less than an inverse number of the duty ratio, the light source driver (160) divides the light sources into blocks and provides the control signal to each block.

5. The light source driving apparatus (100) of claim 2, wherein the switch (140) comprises a plurality of switch elements which interconnect the plurality of the light sources to the light source driver (160).

6. The light source driving apparatus (100) of claim 5, wherein the light source driver (160) outputs the control signal through signal lines linked to the respective plurality of the switch elements.

7. The light source driving apparatus (100) of claim 5, further comprising:
an element selector (280) which selects a switch element among the plurality of the switch elements to drive the selectively fed light sources in response to the control signal.

8. The light source driving apparatus (100) of claim 7, wherein the element selector (280) is a demultiplexer.

9. The light source driving apparatus (100) of claim 1, wherein the light source driver (160) comprises:
a power supplier (162) which outputs the driving current; and
a light source controller (164) which outputs the control signal to the switch (140).

10. The light source driving apparatus (100) of any preceding claim, wherein a light source among the plurality of the light sources is a diode pumped solid state laser.

11. The light source driving apparatus (100) of claim 2, further comprising:
a pulse width modulator (380) which variably generates the predetermined duty ratio.

12. A method for driving a plurality of light sources, comprising:
setting a condition to divide the plurality of the light sources based on time and drive the plurality of the light sources;
generating a control signal based on the condition; and
sequentially providing a driving current to the plurality of the light sources according to the control signal.

13. The method of claim 12, wherein the control signal is a signal to drive the plurality of the light sources with a predetermined duty ratio.

14. The method of claim 13, wherein the setting the condition comprises providing the control signal with respect to the plurality of the light sources by blocks, wherein each block is determined according to the condition in the setting the condition, wherein a number of the blocks corresponds to an integer part of an inverse number of the predetermined duty ratio when a number of the plurality of the light sources is greater than the inverse number of the predetermined duty ratio.

15. The method of claim 13, wherein the setting the condition comprises dividing the plurality of the light sources into blocks and providing the control signal to each block when a number of the plurality of the light sources is less than an inverse number of the predetermined duty ratio.

16. The method of claim 14, wherein the generating the control signal comprises generating a plurality of control signals corresponding to the blocks.

17. The method of claim 14, wherein the generating the control signal comprises selecting a unit of the block and generating a control signal comprising a logical combination to supply the driving current to the unit of the block.

18. A display device comprising:
a display (550) which displays an image;
an optical engine (530) which emits lights of a predetermined luminance to display the image on the display (550); and
a controller (520) which controls the optical engine (530) to process an image signal input from outside and display the image,
wherein the optical engine (530) comprises:
a light source module (120) comprising a plurality of light sources,
a light source driver (160) which outputs a driving current to drive the plurality of the light sources, and
a switch (140) which selectively and plurally feeds the driving current to the plurality of the light sources and sequentially drives the selectively fed light sources.

19. The display device of claim 18, wherein the light source driver (160) sequentially provides the switch (140) with a control signal for driving the selectively fed light sources with a predetermined duty ratio.

20. The display device of claim 18, wherein the optical engine (530) comprises a digital micromirror device (DMD).

21. The display device of claim 18, wherein a light source among the plurality of the light sources is a diode pumped solid state laser.

22. A method for driving a display device which comprises a display (550) to display an image and a plurality of light sources to emit lights of a predetermined luminance, the method comprising:
setting a condition to time-divide and drive the plurality of the light sources;
generating a control signal based on the condition;
sequentially providing a driving current to the plurality of the light sources according to the control signal; and
displaying an image on the display (550) using lights emitted from the plurality of the light sources which are sequentially driven by the driving current.

23. The method of claim 22, wherein the control signal is a signal to drive the plurality of the light sources with a predetermined duty ratio.

24. The method of claim 23, wherein the setting the condition comprises providing the control signal with respect to the plurality of the light sources by blocks, wherein each block is determined according to the condition in the setting the condition, wherein a number of the blocks corresponds to an integer part of an inverse number of the predetermined duty ratio when a number of the plurality of the light sources is greater than the inverse number of the predetermined duty ratio.

25. The method of claim 23, wherein the setting the condition comprises dividing the plurality of the light sources into blocks and providing the control signal to each block when a number of the plurality of the light sources is less than an inverse number of the predetermined duty ratio.
